# EUROPÄISCHE PATENTSCHRIFT

(11) **EP 3 378 062 B1**
(45) Veröffentlichungstag und Bekanntmachung des Hinweises auf die Patenterteilung: **25.03.2020**
(21) Anmeldenummer: 16790932.4
(22) Anmeldetag: 28.10.2016
(51) Int. Cl.: G10L 15/30, H04L 29/08, G10L 15/22

(54) **VERFAHREN ZUM BETREIBEN EINES SERVERSYSTEMS UND ZUM BETREIBEN EINES AUFNAHMEGERÄTS ZUM AUFNEHMEN EINES SPRACHBEFEHLS, SERVERSYSTEM, AUFNAHMEGERÄT UND SPRACHDIALOGSYSTEM**
METHOD FOR OPERATING A SERVER SYSTEM AND FOR OPERATING A RECORDING DEVICE FOR RECORDING A VOICE COMMAND, SERVER SYSTEM, RECORDING DEVICE, AND SPOKEN DIALOG SYSTEM
PROCÉDÉ DE FONCTIONNEMENT D'UN SYSTÈME DE SERVEURS ET DE FONCTIONNEMENT D'UN APPAREIL D'ENREGISTREMENT POUR L'ENREGISTREMENT D'UNE COMMANDE VOCALE, SYSTÈME DE SERVEURS, APPAREIL D'ENREGISTREMENT ET SYSTÈME DE DIALOGUE VOCAL

(30) Priorität: 20.11.2015 DE 102015222956
(43) Veröffentlichungstag der Anmeldung: 26.09.2018
(73) Patentinhaber: Robert Bosch GmbH, 70442 Stuttgart (DE)
(72) Erfinder: SCHEIDECK, Tobias, 31141 Hildesheim (DE); RETTER, Ralph, 70619 Stuttgart (DE)
(86) Internationale Anmeldenummer: PCT/EP2016/076012
(87) Internationale Veröffentlichungsnummer: WO 2017/084860

(56) Entgegenhaltungen:
- EP-A2- 1 104 155
- US-A1- 2005 021 771
- US-A1- 2011 054 894

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Die US 2007/0124149 A1 beschreibt ein sprachgesteuertes Verknüpfungsmodul zum Bearbeiten und Ausführen zumindest einer sprachgesteuerten Funktion eines elektronischen Geräts, das eine sprachgesteuerte Datenbank zum Speichern der Funktion aufweist.

Die US 2011/054894 A1 offenbart ein Verfahren zur Spracherkennung. Dabei sendet ein Gerät eine Initialisierung an einen Router. Der Router schlägt das jüngste akustische Modell und das Sprachmodell des Geräts nach und verbindet das Gerät mit einem geeigneten Server. Der Router speichert diese Verbindung bis das Gerät die Verbindung aufhebt oder sich eine ID des Geräts ändert.

### Offenbarung der Erfindung

Vor diesem Hintergrund werden mit dem hier vorgestellten Ansatz ein Verfahren zum Betreiben eines Serversystems mit zumindest einem Server zum Verarbeiten eines Sprachbefehls, ein Verfahren zum Betreiben eines Aufnahmegeräts zum Aufnehmen eines Sprachbefehls, ein Serversystem, ein Aufnahmegerät, ein Sprachdialogsystem sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Der hier vorgestellte Ansatz schafft ein Verfahren zum Betreiben eines Serversystems mit zumindest einem Server zum Verarbeiten eines Sprachbefehls, der von einem über eine Schnittstelle mit dem Serversystem verbundenen Aufnahmegerät aufgenommen wurde, wobei das Verfahren folgende Schritte umfasst:
Einlesen eines Sitzungsaktivierungssignals, das ein beim oder vor dem Aufnehmen des Sprachbefehls von dem Aufnahmegerät über die Schnittstelle bereitgestelltes Signal repräsentiert;
Überprüfen, ob zwischen dem Sitzungsaktivierungssignal und einer Sitzungs-ID eine Zuordnung besteht;
Ermitteln einer Verfügbarkeit eines vorherigen Servers, der vorangehend auf das Einlesen des Sitzungsaktivierungssignals eine der Sitzungs-ID zugeordnete Sitzung bearbeitet hat, wenn sich im Schritt des Überprüfens ergibt, dass zwischen dem Sitzungsaktivierungssignal und der Sitzungs-ID die Zuordnung besteht;
Aktivieren der Sitzung auf dem vorherigen Server, wenn sich im Schritt des Ermittelns ergibt, dass der vorherige Server verfügbar ist, und/oder Aktivieren der Sitzung auf einem freien Server durch Laden der Sitzung zugeordneter Daten aus einer Sitzungsdatenbank, wenn sich im Schritt des Ermittelns ergibt, dass der vorherige Server nicht verfügbar ist; und
Empfangen des Sprachbefehls über die Schnittstelle während des Aktivierens der Sitzung und/oder nachfolgend auf das Aktivieren der Sitzung; und
Abspeichern von die Sitzung betreffende Daten während der bestehenden Sitzung oder bei Beendigung der Sitzung von dem die Sitzung bearbeitenden Server in der Sitzungsdatenbank.

Unter einem Serversystem kann beispielsweise ein cloudbasiertes Serversystem verstanden werden. Unter einem Sprachbefehl kann ein aufgezeichneter akustischer Befehl in Form eines gesprochenen Wortes, eines gesprochenen Satzes oder einer Abfolge aus mehreren solcher Wörter oder Sätze verstanden werden. Bei der Schnittstelle kann es sich insbesondere um eine Schnittstelle zur drahtlosen Übertragung von Daten zwischen dem Serversystem und dem Aufnahmegerät handeln. Unter einem Aufnahmegerät kann ein sprachgesteuertes Gerät wie etwa ein Navigationsgerät oder Infotainmentsystem, eine Freisprecheinrichtung oder ein sonstiges Steuergerät zum Steuern von Funktionen eines Fahrzeugs verstanden werden. Das Serversystem und das Aufnahmegerät können ein Client-Server-System in Form eines Sprachdialogsystems bilden, wobei das Aufnahmegerät als Client fungiert.

Das Sitzungsaktivierungssignal kann beispielsweise vor, zu Beginn oder kurz nach Beginn einer Aufnahme des Sprachbefehls bereitgestellt werden, etwa ansprechend auf das Betätigen eines entsprechenden Schalters des Aufnahmegeräts oder beim Sprechen eines bestimmten Schlüsselworts zum Aktivieren einer Aufnahmefunktion des Aufnahmegeräts.

Unter einer Sitzungs-ID, englisch session ID, kann eine Kennung zum eindeutigen Identifizieren der Sitzung verstanden werden. Die Sitzungs-ID kann dazu dienen, mehrere zusammengehörige Anfragen des Aufnahmegeräts zu erkennen und einer Sitzung zuzuordnen. Unter einer Sitzung, englisch session, kann eine stehende Verbindung zwischen dem Aufnahmegerät und dem Server verstanden werden. Beispielsweise kann die Sitzungs-ID vom Server zu Beginn der Sitzung erzeugt werden und mit einer Antwort des Servers zum Aufnahmegerät übertragen werden. Hierbei kann das Aufnahmegerät die Sitzungs-ID bei jedem weiteren Zugriff auf den Server mitliefern. Mithilfe der Sitzungs-ID können serverseitig gespeicherte Daten bei jedem Zugriff eindeutig mit dem Aufnahmegerät verbunden werden. Beispielsweise kann eine Anfrage des Aufnahmegeräts, die keine Sitzungs-ID enthält, als erste Anfrage einer neuen Sitzung gewertet werden. Während einer bestehenden Sitzung oder bei Beendigung einer Sitzung können die Sitzung betreffende Daten von dem die Sitzung bearbeitenden Server in der Sitzungsdatenbank abgespeichert werden. Diese Daten können aus der Sitzungsdatenbank auf einen weiteren Server geladen werden, wenn die Sitzung zu einem späteren Zeitpunkt auf dem weiteren Server fortgesetzt wird.

Unter einem freien Server kann ein von dem vorherigen Server abweichender verfügbarer, d. h. betriebsbereiter Server des Serversystems verstanden werden. Beispielsweise kann im Schritt des Ermittelns der freie Server ermittelt werden, wenn der vorherige Server nicht verfügbar ist.

Unter einer Sitzungsdatenbank kann ein Speicher verstanden werden, in dem Sitzungsdaten verschiedener deaktivierter Sitzungen zum Verarbeiten von Sprachbefehlen hinterlegt sind. Entsprechend kann im Schritt des Aktivierens eine solche deaktivierte Sitzung durch Laden der entsprechenden Sitzungsdaten durch den freien Server reaktiviert werden. Beispielsweise kann die Sitzungsdatenbank von jedem Server des Serversystems abgerufen werden.

Je nach Ausführungsform kann der Sprachbefehl empfangen werden, wenn die Aktivierung der entsprechenden Sitzung noch im Gange oder bereits abgeschlossen ist. Im ersten Fall kann der Sprachbefehl beispielsweise so lange zwischengespeichert werden, bis die Sitzung vollständig geladen ist; im zweiten Fall kann der Sprachbefehl direkt nach dem Empfangen in der Sitzung weiterverarbeitet werden.

Der hier beschriebene Ansatz beruht auf der Erkenntnis, dass durch eine frühzeitige Aktivierung einer Sitzung zum serverseitigen Verarbeiten eines Sprachbefehls Latenzzeiten beim Verarbeiten des Sprachbefehls vermieden oder zumindest deutlich reduziert werden können. Vorteilhafterweise kann die Aktivierung einer solchen Sitzung während einer Zeitspanne erfolgen, in der der Sprachbefehl von einem entsprechenden Aufnahmegerät aufgenommen wird. Somit kann die Sitzung aktiviert werden, bevor der Sprachbefehl an den Spracherkennungsserver übertragen wird, sodass der Sprachbefehl unmittelbar im Anschluss an die Übertragung in der Sitzung ausgewertet werden kann.

Ein derart effizientes Sessionmanagement eignet sich insbesondere für hoch skalierbare Sprachdialogsysteme in einer Cloud. Beispielsweise können Server-Dialogmanager für Sprache in einem verteilten Client-Server-System mit einer sehr hohen Clientanzahl effizient skaliert werden, ohne dass dabei lange Latenzzeiten auftreten. Damit kann ein Gesamtsystem aus eingebettetem System, englisch embedded device, und Serverbackend für langlaufende Sprachdialoge so verbessert werden, dass für möglichst viele Clients nur möglichst wenige Server erforderlich sind. Je nach Ausführungsform können den einzelnen Clients bei Bedarf dynamisch neue Server zugewiesen werden, die beispielsweise auf Bedarf in der Cloud provisioniert werden. Ferner ist es möglich, komplexe Session-States in sehr langlaufenden Sprachdialogen aufzubauen, ohne dass sich hierbei für den Nutzer lange Latenzzeiten ergeben.

Dadurch, dass in Backend-Sprachdialogsystemen mit sehr vielen Clients und langlaufenden Dialogen eine horizontale Skalierbarkeit des Sprachdialogsystems in Verbindung mit einem eingebetteten Client erreicht werden kann, ohne dass für den Nutzer des Sprachdialogsystems observierbare Latenzzeiten bei der Reaktivierung inaktiver Sitzungen entstehen, ergeben sich folgende Vorteile.

Ein derartiges Sprachdialogsystem kann sehr viele Clients mit verhältnismäßig geringen Serverressourcen bedienen, indem Sitzungen schon bei kurzen Perioden der Inaktivität auf Nutzerseite auf dem jeweiligen Server inaktiv geschaltet werden können und die frei gewordenen Serverressourcen wiederum anderen Clients zugewiesen werden können. Somit kann die Wirtschaftlichkeit des Gesamtsystems erhöht werden.

Das heißt, Anfragen können flexibel auf die vorhandene Rechenleistung verteilt werden, indem die Anfragen eines Clients je nach Verfügbarkeit und Auslastung an unterschiedliche Server des Serversystems geleitet werden. Dies ermöglicht auch das dynamische Zu- und Abschalten von Cloudressourcen und somit die Nutzung von Pay-Per-Use-Bezahlmodellen für Serverressourcen.

Wie bereits erwähnt, besteht ein wesentlicher Vorteil des hier beschriebenen Ansatzes darin, dass der Nutzer anhand der Antwortlatenzzeiten keinen Unterschied zwischen einer bei einer Anfrage gerade aktiven Serversitzung und einer bei einer Anfrage nicht aktiven Serversitzung wahrnimmt.

Dies geschieht durch Ausnutzen der sprachdialogspezifischen Eigenschaften des Gesamtsystems. Beispielsweise kann zum Aufnehmen eines Sprachbefehls ein sogenannter Push-to-talk-Button gedrückt werden oder auch ein sogenanntes Hotword gesprochen werden, um dem Clientgerät in Form des Aufnahmegeräts den Beginn einer Spracheingabe zu signalisieren. Der Nutzer kann beispielsweise mit einem akustischen Signal und, je nach Systemkonfiguration, auch per Sprachprompt zum Sprechen aufgefordert werden, worauf der Nutzer den Sprachbefehl spricht und ein entsprechender Audiostream an das Dialogsystem übertragen wird. Die Zeitspanne zwischen Drücken des Push-to-Talk-Buttons oder Erkennen des Hotwords und dem Ende des Sprechens des Sprachbefehls kann nun genutzt werden, um einen Sitzungsstatus zu reaktivieren. Somit können Latenzzeiten, die über eine normale Latenz des Sprachbediensystems hinausgehen, vermieden werden.

Je nach Ausführungsform kann der hier beschriebene Ansatz auch im Kontext von Systemen verwendet werden, in denen Sprachbefehle nicht auf einmal, sondern als Stream übertragen werden. Hierbei kann beispielsweise schon zu Beginn des Streams das Sitzungsaktivierungssignal zur Aktivierung einer Sitzung gesendet werden.

Gemäß einer Ausführungsform kann das Verfahren einen Schritt des Verarbeitens des Sprachbefehls umfassen. Hierbei kann der Sprachbefehl in der Sitzung unter Verwendung des vorherigen Servers verarbeitet werden, wenn die Sitzung auf dem vorherigen Server aktiviert wurde. Zusätzlich oder alternativ kann der Sprachbefehl unter Verwendung des freien Servers verarbeitet werden, wenn die Sitzung auf dem freien Server aktiviert wurde. Dadurch, dass der Sprachbefehl je nach Verfügbarkeit von unterschiedlichen Servern des Serversystems verarbeitet werden kann, kann die Effizienz des Serversystems verbessert werden.

Von Vorteil ist auch, wenn der Sprachbefehl in einem Schritt des Zwischenspeicherns zwischengespeichert wird, wenn die Sitzung beim Empfangen des Sprachbefehls noch nicht aktiviert ist. Dadurch kann der Sprachbefehl direkt im Anschluss an die Aktivierung der Sitzung verarbeitet werden, womit eine Latenzzeit zwischen Empfang und Verarbeitung des Sprachbefehls reduziert werden kann.

Gemäß einer weiteren Ausführungsform kann im Schritt des Ermittelns der freie Server ermittelt werden, wenn sich im Schritt des Überprüfens ergibt, dass zwischen dem Sitzungsaktivierungssignal und der Sitzungs-ID keine Zuordnung besteht. Dabei kann in einem Schritt des Erstellens eine neue Sitzungs-ID durch den freien Server erstellt werden, im Schritt des Aktivierens auf dem freien Server eine der neuen Sitzungs-ID zugeordnete neue Sitzung aktiviert werden und im Schritt des Empfangens der Sprachbefehl während des Aktivierens der neuen Sitzung und/oder nachfolgend auf das Aktivieren der neuen Sitzung empfangen werden. Dadurch wird auch beim Starten neuer Sitzungen eine schnelle und effiziente Verteilung von Serverressourcen des Serversystems ermöglicht.

Es ist vorteilhaft, wenn im Schritt des Ermittelns der freie Server ermittelt wird, wenn sich im Schritt des Ermittelns ergibt, dass der vorherige Server nicht verfügbar ist. Dadurch kann die Sitzung ausgeführt werden, auch wenn der vorherige Server nicht verfügbar ist.

Zudem kann im Schritt des Einlesens ferner zumindest ein weiteres Sitzungsaktivierungssignal eingelesen werden, das ein beim Aufnehmen eines weiteren Sprachbefehls von einem über die Schnittstelle mit dem Serversystem verbundenen weiteren Aufnahmegerät bereitgestelltes Signal repräsentiert. Entsprechend kann im Schritt des Überprüfens überprüft werden, ob zwischen dem weiteren Sitzungsaktivierungssignal und einer weiteren Sitzungs-ID eine Zuordnung besteht. Im Schritt des Ermittelns kann eine Verfügbarkeit eines weiteren vorherigen Servers ermittelt werden, der vorangehend auf das Einlesen des weiteren Sitzungsaktivierungssignals eine der weiteren Sitzungs-ID zugeordnete weitere Sitzung bearbeitet hat, wenn sich im Schritt des Überprüfens ergibt, dass zwischen dem weiteren Sitzungsaktivierungssignal und der weiteren Sitzungs-ID die Zuordnung besteht. Im Schritt des Aktivierens kann die weitere Sitzung auf dem weiteren vorherigen Server aktiviert werden, wenn sich im Schritt des Ermittelns ergibt, dass der weitere vorherige Server verfügbar ist. Zusätzlich oder alternativ kann im Schritt des Aktivierens die weitere Sitzung auf dem freien Server oder einem weiteren freien Server oder sowohl auf dem freien Server als auch auf dem weiteren freien Server durch Laden der weiteren Sitzung zugeordneter Daten aus der Sitzungsdatenbank aktiviert werden, wenn sich im Schritt des Ermittelns ergibt, dass der weitere vorherige Server nicht verfügbar ist. Schließlich kann im Schritt des Empfangens der weitere Sprachbefehl während des Aktivierens der weiteren Sitzung und, zusätzlich oder alternativ, nachfolgend auf das Aktivieren der weiteren Sitzung empfangen werden. Das Aufnahmegerät und das Aufnahmegerät können beispielsweise in verschiedenen Fahrzeugen eingebaut sein und über eine geeignete drahtlose Kommunikationsverbindung mit dem Serversystem verbunden sein. Dadurch können Sprachbefehle einer Mehrzahl von Aufnahmegeräten von ein und demselben Serversystem verarbeitet werden, wodurch die Aufnahmegeräte weniger komplex und somit günstiger hergestellt werden können.

Der hier vorgeschlagene Ansatz schafft ferner ein Verfahren zum Betreiben eines Aufnahmegeräts zum Aufnehmen eines Sprachbefehls, wobei das Aufnahmegerät über eine Schnittstelle mit einem Serversystem mit zumindest einem Server zum Verarbeiten des Sprachbefehls verbunden ist, wobei das Verfahren den folgenden Schritt umfasst:
Bereitstellen eines Sitzungsaktivierungssignals an die Schnittstelle, wenn der Sprachbefehl aufgenommen wird, um eine Sitzung zum Verarbeiten des Sprachbefehls auf dem Server zu aktivieren.

Diese Verfahren können beispielsweise in Software oder Hardware oder in einer Mischform aus Software und Hardware beispielsweise in einem Steuergerät implementiert sein.

Des Weiteren schafft der hier beschriebene Ansatz ein Serversystem mit folgenden Merkmalen:
zumindest einem Server zum Verarbeiten eines Sprachbefehls, der einen von einem über eine Schnittstelle mit dem Serversystem verbundenen Aufnahmegerät aufgenommen Sprachbefehl repräsentiert;
einer Einleseeinheit zum Einlesen eines Sitzungsaktivierungssignals, das ein beim Aufnehmen des Sprachbefehls von dem Aufnahmegerät über die Schnittstelle bereitgestellten Sitzungsaktivierungssignals repräsentiert;
einer Überprüfungseinheit zum Überprüfen, ob zwischen dem Sitzungsaktivierungssignal und einer Sitzungs-ID eine Zuordnung besteht;
einer Ermittlungseinheit zum Ermitteln einer Verfügbarkeit eines vorherigen Servers, der vorangehend auf das Einlesen des Sitzungsaktivierungssignals eine der Sitzungs-ID zugeordnete Sitzung bearbeitet hat, wenn zwischen dem Sitzungsaktivierungssignal und der Sitzungs-ID die Zuordnung besteht;
einer Sitzungsdatenbank;
einer Aktivierungseinheit zum Aktivieren der Sitzung auf dem vorherigen Server, wenn der vorherige Server verfügbar ist, und/oder zum Aktivieren der Sitzung auf einem freien Server durch Laden der Sitzung zugeordneter Daten aus der Sitzungsdatenbank, wenn der vorherige Server nicht verfügbar ist; und
einer Empfangseinheit zum Empfangen des Sprachbefehls während des Aktivierens der Sitzung und/oder nachfolgend auf das Aktivieren der Sitzung.

Der die Sitzung bearbeitende Server ist ausgebildet um die Sitzung betreffende Daten während der bestehenden Sitzung oder bei Beendigung der Sitzung in der Sitzungsdatenbank abzuspeichern.

Beispielsweise kann die Einlese-, Überprüfungs- und Ermittlungseinheit als Komponente einer Lastverteilungseinheit des Serversystems, englisch auch load balancer genannt, realisiert sein. Hingegen kann die Empfangseinheit oder die Aktivierungseinheit beispielsweise als Komponente einer einem einzelnen Server zugeordneten Sitzungsverwaltungseinheit, englisch session manager, realisiert sein. Alternativ kann die Empfangseinheit oder die Aktivierungseinheit auch in die Lastverteilungseinheit integriert sein. Beispielsweise kann die Sitzungsdatenbank ausgebildet sein, um mit den jeweiligen Sitzungsverwaltungseinheiten verschiedener Server des Serversystems zu kommunizieren.

Ein solches Serversystem ermöglicht eine schnelle sowie kosten- und ressourcensparende Verarbeitung von Sprachbefehlen.

Ferner schafft der hier vorgestellte Ansatz ein Aufnahmegerät zum Aufnehmen eines Sprachbefehls, wobei das Aufnahmegerät folgende Merkmale aufweist:
eine Schnittstelle zu einem Serversystem mit zumindest einem Server zum Verarbeiten des Sprachbefehls; und
eine Bereitstellungseinheit, die ausgebildet ist, um beim Aufnehmen des Sprachbefehls ein Sitzungsaktivierungssignal zum Aktivieren einer Sitzung zum Verarbeiten des Sprachbefehls auf dem Server an die Schnittstelle bereitzustellen.

Dadurch, dass die Verarbeitung des Sprachbefehls nicht durch das Aufnahmegerät selbst, sondern mittels eines externen Serversystems erfolgt, kann die Herstellung des Aufnahmegeräts vereinfacht werden. Ferner kann dadurch die Implementierung neuer Sprachbefehle erleichtert werden.

Schließlich schafft der hier beschriebene Ansatz ein Sprachdialogsystem mit folgenden Merkmalen:
einem Serversystem gemäß einer vorstehenden Ausführungsform; und
zumindest einem über eine Schnittstelle mit dem Serversystem verbundenen Aufnahmegerät gemäß einer vorstehenden Ausführungsform.

Bei dem Sprachdialogsystem kann es sich beispielsweise um ein cloudbasiertes System handeln, in dem zur Verarbeitung von Sprachbefehlen einzelne Server je nach Bedarf schnell und einfach hinzugefügt oder entfernt werden können. Dadurch lässt sich das Sprachdialogsystem besonders effizient und kostensparend betreiben. Beispielsweise kann das Sprachdialogsystem die zur Verarbeitung von Sprachbefehlen notwendigen Schritte auf mehrere Komponenten verteilen. Diese Komponenten können beispielsweise auf verschiedene Server verteilt sein.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 eine schematische Darstellung eines Sprachdialogsystems gemäß einem Ausführungsbeispiel;
Fig. 2 eine schematische Darstellung eines Sprachdialogsystems gemäß einem Ausführungsbeispiel;
Fig. 3 eine schematische Darstellung eines Serversystems gemäß einem Ausführungsbeispiel;
Fig. 4 ein Ablaufdiagramm eines Verfahrens zum Betreiben eines Serversystems gemäß einem Ausführungsbeispiel; und
Fig. 5 ein Ablaufdiagramm eines Verfahrens zum Betreiben eines Aufnahmegeräts gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

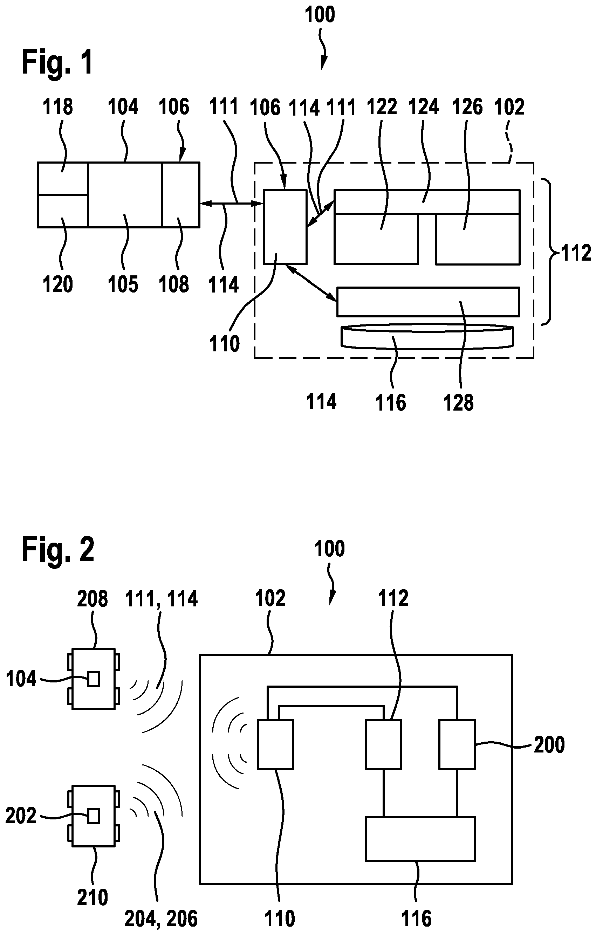

Fig. 1 zeigt eine schematische Darstellung eines Sprachdialogsystems 100 gemäß einem Ausführungsbeispiel. Das Sprachdialogsystem 100 umfasst ein Serversystem 102 sowie ein Aufnahmegerät 104 mit einer Bereitstellungseinheit 105. Das Aufnahmegerät 104 ist über eine Schnittstelle 106 mit dem Serversystem 102 verbunden. Gemäß diesem Ausführungsbeispiel umfasst die Schnittstelle 106 ein Konnektivitätsmodul 108 des Aufnahmegeräts 104 sowie eine Lastverteilungseinheit 110 des Serversystems 102, englisch load balancer genannt. Das Konnektivitätsmodul 108 und die Lastverteilungseinheit 110 sind beispielsweise ausgebildet, um über eine drahtlose Datenverbindung miteinander zu kommunizieren. Das Aufnahmegerät 104 ist ausgebildet, um einen von einem Benutzer des Aufnahmegeräts 104 gesprochenen Sprachbefehl 111 aufzunehmen und über die Schnittstelle 106 an das Serversystem 102 zu übertragen. Das Serversystem 102 ist beispielhaft mit einem Server 112 realisiert, der mit der Lastverteilungseinheit 110 verbunden und ausgebildet ist, um den über die Lastverteilungseinheit 110 eingelesenen Sprachbefehl 111 zu verarbeiten. Je nach Ausführungsbeispiel kann das Serversystem 102 auch mit zwei oder mehr als zwei solcher Server realisiert sein. Das Sprachdialogsystem 100 ist beispielsweise cloudbasiert.

Die Bereitstellungseinheit 105 ist ausgebildet, um beim Aufnehmen des Sprachbefehls 111 ein Sitzungsaktivierungssignal 114 bereitzustellen und an das Konnektivitätsmodul 108 zu senden. Das Konnektivitätsmodul 108 überträgt das Sitzungsaktivierungssignal 114 an die Lastverteilungseinheit 110. Die Lastverteilungseinheit 110 überprüft hierauf, ob zwischen dem Sitzungsaktivierungssignal 114 und einer Sitzungs-ID eine Zuordnung besteht, d. h., ob das Sitzungsaktivierungssignal 114 einer bereits vorhandenen Sitzung zum Verarbeiten des Sprachbefehls 111 mittels eines Servers des Serversystems 102 zugeordnet ist. Ist dies der Fall, so ermittelt die Lastverteilungseinheit 110 denjenigen Server, der die dem Sitzungsaktivierungssignal 114 zugeordnete, der Sitzungs-ID entsprechende Sitzung zuletzt bearbeitet hat, und ob dieser Server zum Zeitpunkt des Empfangens des Sitzungsaktivierungssignals 114 verfügbar ist.

Beispielsweise ermittelt die Lastverteilungseinheit 110 in Fig. 1, dass der Server 112 die Sitzung zuletzt bearbeitet hat und gleichzeitig verfügbar ist, d. h., dass die Sitzung auf dem Server 112 noch aktiv ist. Entsprechend leitet die Lastverteilungseinheit 110 den Sprachbefehl 111 an den Server 112 weiter, damit dieser den Sprachbefehl 111 in der noch aktiven Sitzung verarbeiten kann.

Ermittelt die Lastverteilungseinheit 110 hingegen, dass der Server 112 nicht verfügbar ist und ein anderer Server des Serversystems 102 verfügbar ist, so aktiviert die Lastverteilungseinheit 110 die Sitzung entsprechend auf dem anderen Server. Hierzu lädt der andere Server Sitzungsdaten bezüglich der Sitzung aus einer Sitzungsdatenbank 116 des Serversystems 102.

Nach Aktivierung der Sitzung empfängt der andere Server den Sprachbefehl 111 von der Lastverteilungseinheit 110, um diesen in der aktivierten Sitzung zu verarbeiten. Alternativ empfängt der andere Server der Sprachbefehl 111 bereits während der Aktivierung der Sitzung. Dadurch, dass die Sitzung mithilfe des Sitzungsaktivierungssignals 114 bereits zu Beginn einer Aufnahme des Sprachbefehls 111 aktiviert wird, können zeitliche Verzögerungen bei der anschließenden Verarbeitung des Sprachbefehls 111 vermieden werden, d. h., die Sitzung ist bereits vollständig aktiviert, wenn der Sprachbefehl 111 vom anderen Server empfangen wird.

Eingebettete Geräte für Infotainment-Systeme in Kraftfahrzeugen können beispielsweise mithilfe eines lokalen Dialogmanagers gesteuert werden, der genau diesem Gerät zur Verfügung steht und im Wesentlichen genau einen Benutzer bedient. Ein solcher lokaler Dialogmanager ist jedoch nach Auslieferung des eingebetteten Systems, etwa des Fahrzeugs, in der Regel nur schwer anzupassen und kann nur mit den limitierten Ressourcen der im eingebetteten System verbauten Rechnerkomponenten betrieben werden. Um dies zu verhindern, kann der gesamte Dialogmanager, oder zumindest Teile davon, in ein Serverbackend verlagert werden. Dies hat den Vorteil, dass der Dialogmanager für alle Clients zentral im Serverbackend angepasst und aktualisiert werden kann.

Um ein solches Serversystem auf viele Clients in Form verschiedener Aufnahmegeräte zu skalieren, können Anfragen dieser Clients mittels einer oder mehrerer Lastverteilungseinheiten auf mehrere Instanzen des Serversystems verteilt werden. Dadurch kann eine sogenannte horizontale Skalierbarkeit erreicht werden, in der die Anzahl der Clients durch Hinzufügen weiterer Server im Backend erhöht werden kann. Je nach Anwendungsfall kann ein einzelner Server des Serversystems beispielsweise mehrere Clients gleichzeitig bedienen. Dadurch, dass nicht immer alle Clients gleichzeitig aktiv sind, ist es möglich, die Anzahl an benötigten Servern möglichst klein zu halten, sodass möglichst viele Clientsitzungen auf möglichst wenige Server verteilt werden.

Üblicherweise werden bei langlaufenden Transaktionen, etwa bei Sprachdialogen, Sitzungen von Clients, die gerade nicht aktiv sind, in einem persistenten Speichermedium gehalten, damit die benötigten Rechenressourcen aktiven Clients zugeordnet werden können. Bei Reaktivierung eines Clients kann die Sitzung auf dem entsprechenden Server aus dem persistenten Speicher reaktiviert werden. Der Server kann nun den langlaufenden Dialog an dem Punkt fortsetzen, an dem der Client sich vor seiner inaktiven Phase befunden hat. Bei sehr großen Sitzungen, etwa für komplexe Sprachdialoge und Kontextmodelle, kann das Reaktivieren der entsprechenden Dialogsitzungen jedoch gegebenenfalls so lange dauern, dass observierbare Latenzzeiten auftreten.

Die Anzahl der Server im Backend kann beispielsweise statisch daraufhin ausgerichtet sein, wie viele Clients im Extremfall gleichzeitig aktiv sind und wie viel Rechenleistung entsprechend der Anzahl gleichzeitig aktiver Clients im Extremfall benötigt wird.

Alternativ können sogenannte Cloudplattformen verwendet werden, die das Provisionieren neuer Server innerhalb von Sekunden oder Minuten erlauben. Dadurch können Backends je Anzahl der aktiven Clients dynamisch wachsen oder schrumpfen, d. h., es können Server dynamisch zur Cloud hinzugefügt oder aus der Cloud entfernt werden.

Um diese Latenzzeiten zu vermeiden oder zu verkürzen, umfasst das per Sprache zu bedienende Aufnahmegerät 104 beispielsweise ein Konnektivitätsmodul 108, das ausgebildet ist, um eine Verbindung zwischen der Bereitstellungseinheit 105 und einem webbasierten Serversystem 102 via WLAN, GSM, LTE, Ethernet oder Bluetooth herzustellen. Optional umfasst das Konnektivitätsmodul 108 ein Sicherheitsmodul zur Authentifizierung, Autorisierung und Verschlüsselung der Übertragung von Daten zwischen der Bereitstellungseinheit 105 und dem Serversystem 102.

In das Aufnahmegerät 104 ist ferner ein Sprachbediensystem aus einem Mikrofon 118 zum Aufnehmen des Sprachbefehls 111 und einer Sprachausgabeeinheit 120 zum Wiedergeben akustischer Signale wie etwa von Sprachnachrichten integriert.

Serverseitig umfasst das Sprachdialogsystem 100 die Lastverteilungseinheit 110 sowie ein cloudbasiertes Serversystem 102 mit einem Spracherkenner 122, einem Dialogmanager 124, einer optionalen Text-to-Speech-Engine 126, einem Sessionmanager 128 und der Sitzungsdatenbank 116. Alternativ können Teile des Sprachdialogsystems, insbesondere der Spracherkenner 122 die Text-to-Speech-Engine 126 auch auf einem oder mehreren weiteren Servern residieren und per Netzwerkkommunikation an den Server 112 angebunden sein.

Gemäß dem in Fig. 1 gezeigten Ausführungsbeispiel sind der Dialogmanager 124, der Spracherkenner 122, die Text-to-Speech-Engine 126 und der Sessionmanager 128 als Komponenten des Servers 112 realisiert.

Nachfolgend wird die Funktionsweise des Sprachdialogsystems 100 beschrieben.

Wenn ein Nutzer des Aufnahmegeräts 104 einen Aufnahmeschalter des Aufnahmegeräts 104 aktiviert, auch Push-to-Talk-Button genannt, oder ein Stichwort zum Starten einer Aufnahme über das Sprachbediensystem des Aufnahmegeräts 104 spricht, englisch hot word genannt, leitet das Aufnahmegerät 104 ein Sitzungsaktivierungskommando in Form des Sitzungsaktivierungssignals 114 über das Konnektivitätsmodul 108 an das cloudbasierte Serversystem 102 weiter. Der Empfang des Sitzungsaktivierungssignals 114 erfolgt durch die Lastverteilungseinheit 110.

Bei der Verarbeitung des Sitzungsaktivierungssignals 114 kann zwischen drei Fällen unterschieden werden.

Im ersten Fall besteht keine Zuordnung zwischen dem Sitzungsaktivierungssignal 114 und einer Sitzungs-ID. In diesem Fall nutzt die Lastverteilungseinheit 110 einen Standardalgorithmus wie etwa Round-Robin, um Anfragen ohne Sitzungs-ID, d. h. neue Sitzungen, an den Sessionmanager 128 des Servers 112 weiterzuleiten. Zusätzlich zum Server 112 kann das Serversystem 102 eine Mehrzahl weiterer Server aufweisen, wobei die Anfragen je nach Verfügbarkeit statt an den Server 112 auch an einen aus der Mehrzahl weiterer Server weitergeleitet werden können. Der Sessionmanager 128 erstellt hierauf eine neue Sitzungs-ID und stößt den Dialogmanager 124 an. Der Dialogmanager 124 ist ausgebildet, um den Nutzerdialog unter Verwendung des Spracherkenners 122, der Text-to-Speech-Engine 126 sowie von Anwendungsfunktionalitäten und gegebenenfalls externer Dienste zu verwalten und über das Konnektivitätsmodul 108, das Sprachbediensystem oder anderen Schnittstellen des Aufnahmegeräts 104 mit dem Nutzer zu interagieren.

Im zweiten Fall ist bereits eine Sitzung vorhanden. Enthält eine Nachricht an einen Server eine Sitzungs-ID, so versucht die Lastverteilungseinheit 110, die Anfrage an denjenigen Server weiterzuleiten, der die Sitzung bisher bearbeitet hat. Ist dieser nicht verfügbar oder ausgelastet, so leitet die Lastverteilungseinheit 110 die Sitzung an einen anderen verfügbaren Server weiter, wie nachfolgend beschrieben. Ist der betreffende Server verfügbar, in Fig. 1 beispielsweise der Server 112, so prüft der Sessionmanager 128, ob die der Sitzungs-ID entsprechende Sitzung noch auf dem Server 112 aktiv ist. Wenn ja, verwendet der Sessionmanager 128 die Sitzung einfach weiter. Wenn nein, wird die entsprechende Sitzung reaktiviert, wie nachfolgend beschrieben.

Im dritten Fall ist bereits eine Sitzung vorhanden, jedoch ist die Sitzung deaktiviert. Die Sitzung ist beispielsweise aus folgenden Gründen nicht aktiv.

Die Sitzung wurde persistiert, um Rechenleistung oder Speicher für andere Clients freizugeben, sodass der Server die Sitzung zwar vorher bearbeitet hat, diese sich aber nicht mehr im aktiven Speicher des Servers befindet. Ein weiterer Grund kann darin bestehen, dass der Server, der die Sitzung vorher bearbeitet hat, inzwischen nicht mehr verfügbar ist, etwa weil er überlastet oder ausgefallen ist oder gerade aktualisiert wird, sodass die Sitzung nun durch einen anderen Server bearbeitet werden muss.

Erreicht nun ein Sitzungsinitiierungskommando in Form des Sitzungsaktivierungssignals 114 einen solchen freien Server, so verwendet dieser seinen Sessionmanager, um die Sitzung aus der gemeinsam genutzten Sitzungsdatenbank 116 zu laden, und teilt der Lastverteilungseinheit 110 mit, dass er die Sitzung bearbeitet. Wird der Sprachbefehl 111 vom Aufnahmegerät 114 nun an den freien Server geschickt, so ist die Sitzung bereits aktiviert, sodass der Sprachbefehl 111 direkt verarbeitet werden kann.

Dauert das Laden von Sitzungen sehr lange, so kann der freie Server Folgeanfragen in einer Warteschlange zwischenspeichern und direkt nach erfolgreicher Aktivierung der Sitzung verarbeiten. In diesem Fall lässt sich die Latenz zumindest um die Dauer des Sprechens des Sprachbefehls 111 oder des Übertragens eines ersten Teils eines Streams reduzieren.

Fig. 2 zeigt eine schematische Darstellung eines Sprachdialogsystems 100 gemäß einem Ausführungsbeispiel. Bei dem Sprachdialogsystem 100 handelt es sich beispielsweise um ein Sprachdialogsystem, wie es vorangehend anhand von Fig. 1 beschrieben ist. Gezeigt sind das Serversystem 102 mit der Lastverteilungseinheit 110 und dem Server 112. Im Unterschied zu Fig. 1 ist das Serversystem 102 gemäß diesem Ausführungsbeispiel mit einem weiteren Server 200 zum Verarbeiten von Sprachbefehlen realisiert. Der weitere Server 200 ist wie der Server 112 sowohl mit der Lastverteilungseinheit 110 als auch mit der Sitzungsdatenbank 116 verbunden. Des Weiteren umfasst das Sprachdialogsystem 100 zusätzlich zum Aufnahmegerät 104 ein weiteres Aufnahmegerät 202, das ausgebildet ist, um beim Aufnehmen eines weiteren Sprachbefehls 204 ein weiteres Sitzungsaktivierungssignal 206 bereitzustellen und an die Lastverteilungseinheit 110 zu senden. Entsprechend ist die Lastverteilungseinheit 110 ausgebildet, um zu überprüfen, ob zwischen dem weiteren Sitzungsaktivierungssignal 206 und einer weiteren Sitzungs-ID eine Zuordnung besteht, und im Fall einer Zuordnung zu ermitteln, ob ein Server, der zuvor eine der weiteren Sitzungs-ID zugeordnete weitere Sitzung bearbeitet hat, verfügbar ist. Bei dem verfügbaren Server handelt es sich beispielsweise um den weiteren Server 200. Die weitere Sitzung wird nun dadurch auf dem weiteren Server 200 aktiviert, dass der weitere Server 200 die weitere Sitzung aus der Sitzungsdatenbank 116 lädt. Analog zur Verarbeitung des Sprachbefehls 111 wird der weitere Sprachbefehl 204 je nach Ausführungsbeispiel bereits während des Aktivierens der weiteren Sitzung oder auch direkt im Anschluss auf das Aktivieren der weiteren Sitzung von dem weiteren Server 200 empfangen.

Wie in Fig. 2 zu erkennen, ist das Aufnahmegerät 104 in ein erstes Fahrzeug 208 und das weitere Aufnahmegerät 202 in ein zweites Fahrzeug 210 eingebaut.

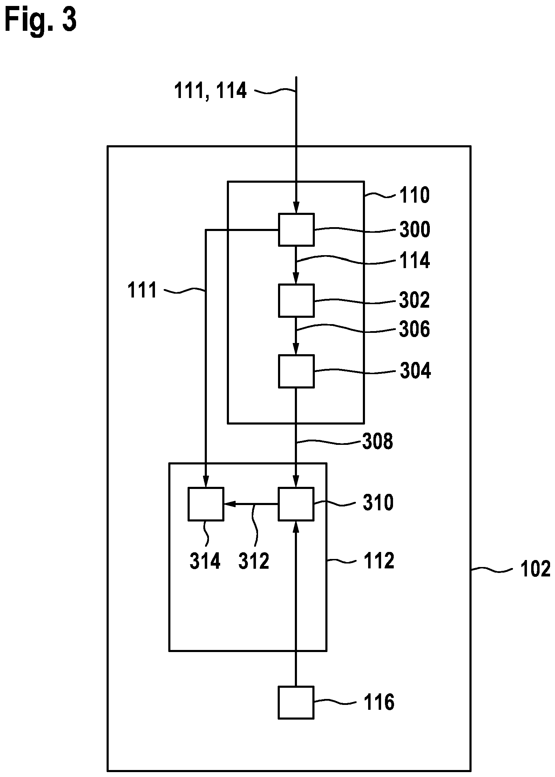

Fig. 3 zeigt eine schematische Darstellung eines Serversystems 102 gemäß einem Ausführungsbeispiel. Bei dem Serversystem 102 handelt es sich beispielsweise um ein vorangehend anhand von Fig. 1 beschriebenes Serversystem. Die Lastverteilungseinheit 110 ist gemäß diesem Ausführungsbeispiel mit einer Einleseeinheit 300, einer Überprüfungseinheit 302 und einer Ermittlungseinheit 304 realisiert. Die Einleseeinheit 300 ist ausgebildet, um den Sprachbefehl 111 sowie das Sitzungsaktivierungssignal 114 einzulesen. Die Überprüfungseinheit 302 ist ausgebildet, um das Sitzungsaktivierungssignal 114 von der Einleseeinheit 300 zu empfangen, unter Verwendung des Sitzungsaktivierungssignals 114 zu überprüfen, ob sich das Sitzungsaktivierungssignal 114 einer Sitzungs-ID zuordnen lässt, und im Fall einer bestehenden Zuordnung ein entsprechendes Zuordnungssignal 306 an die Ermittlungseinheit 304 zu senden. Die Ermittlungseinheit 304 ist ausgebildet, um unter Verwendung des Zuordnungssignals 306 die Verfügbarkeit des Servers 112 zu ermitteln, der vorangehend auf das Einlesen des Sitzungsaktivierungssignals 114 durch die Einleseeinheit 300 die der Sitzungs-ID zugeordnete Sitzung bearbeitet hat. Hat die Ermittlungseinheit 304 die Verfügbarkeit des Servers 112 ermittelt, so sendet sie ein entsprechendes Aktivierungssignal 308 an eine Aktivierungseinheit 310 des Servers 112. Die Aktivierungseinheit 310 ist beispielsweise als Komponente eines Sessionmanagers des Servers 112 realisiert. Die Aktivierungseinheit 310 ist ausgebildet, um unter Verwendung des Aktivierungssignals 308 die der Sitzungs-ID zugeordnete Sitzung auf dem Server 112 fortzuführen oder die Sitzung, sofern diese deaktiviert ist, durch Laden entsprechender Sitzungsdaten aus der Sitzungsdatenbank 116 zu reaktivieren.

Die Aktivierungseinheit 310 ist ferner ausgebildet, um nachfolgend auf das Aktivieren der Sitzung oder auch schon während des Aktivierens der Sitzung ein Empfangssignal 312 an eine Empfangseinheit 314 des Servers 112 zu senden. Die Empfangseinheit 314 ist ausgebildet, um unter Verwendung des Empfangssignals 312 den Sprachbefehl 111 von der Einleseeinheit 300 zu empfangen. Der Sprachbefehl 111 wird nun in der durch die Aktivierungseinheit 110 aktivierten Sitzung verarbeitet.

Ebenso wie die Aktivierungseinheit 310 kann auch die Empfangseinheit 314 als Komponente des Sessionmanagers des Servers 112 realisiert sein.

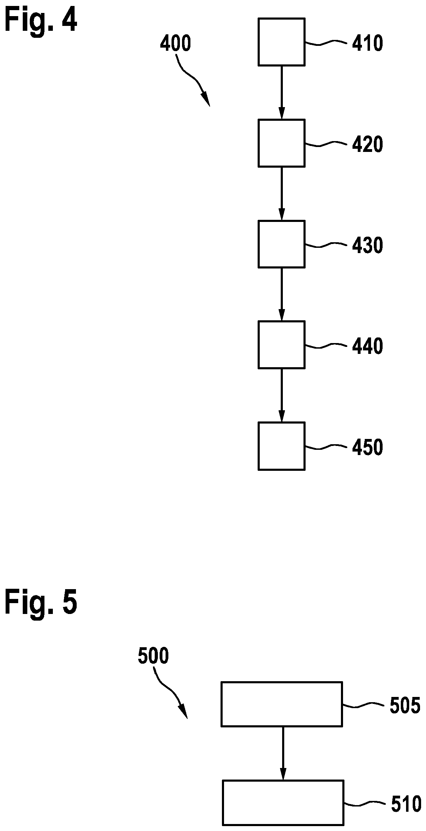

Fig. 4 zeigt ein Ablaufdiagramm eines Verfahrens 400 zum Betreiben eines Serversystems gemäß einem Ausführungsbeispiel. Das Verfahren 400 kann beispielsweise im Zusammenhang mit einem vorangehend anhand der Figuren 1 bis 3 beschriebenen Serversystem durchgeführt werden. Hierbei wird in einem Schritt 410 zunächst das beim Aufnehmen des Sprachbefehls über die Schnittstelle bereitgestellte Sitzungsaktivierungssignal eingelesen. In einem weiteren Schritt 420 wird überprüft, ob das Sitzungsaktivierungssignal eine Sitzungs-ID aufweist oder nicht. Weist das Sitzungsaktivierungssignal die Sitzungs-ID auf, so wird in einem Schritt 430 ermittelt, ob ein vorheriger Server, der vorangehend auf das Einlesen des Sitzungsaktivierungssignals eine der Sitzungs-ID zugeordnete Sitzung bearbeitet hat, verfügbar ist oder nicht. Ist der vorherige Server verfügbar, so wird in einem Schritt 440 die Sitzung auf dem vorherigen Server aktiviert. Ist der vorherige Server hingegen nicht verfügbar, so wird die Sitzung im Schritt 440 mithilfe eines anderen, freien Servers des Serversystems durch Laden der Sitzung aus der Sitzungsdatenbank aktiviert. Nachfolgend auf das Aktivieren der Sitzung wird in einem Schritt 450 der Sprachbefehl zur Verarbeitung in der aktivierten Sitzung auf dem entsprechenden Server empfangen. Alternativ wird der Sprachbefehl im Schritt 450 bereits während des Aktivierens der Sitzung empfangen.

Fig. 5 zeigt ein Ablaufdiagramm eines Verfahrens 500 zum Betreiben eines Aufnahmegeräts gemäß einem Ausführungsbeispiel. Das Verfahren 500 kann beispielsweise im Zusammenhang mit einem vorangehend anhand der Figuren 1 bis 3 beschriebenen Aufnahmegerät zum Aufnehmen eines Sprachbefehls durchgeführt werden. Das Verfahren 500 umfasst einen Schritt 510, in dem das Sitzungsaktivierungssignal zum Aktivieren einer Serversitzung zur Verarbeitung des Sprachbefehls bereitgestellt wird, sobald in einem Schritt 505 eine Aufnahme des Sprachbefehls durch einen Benutzer des Aufnahmegeräts gestartet wird, etwa durch Betätigen eines entsprechenden Aufnahmeknopfes des Aufnahmegeräts oder durch Sprechen eines Stichworts zum Starten der Aufnahme.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (400) zum Betreiben eines Serversystems (102) mit zumindest einem Server (112) zum Verarbeiten eines Sprachbefehls (111), der von einem über eine Schnittstelle (106) mit dem Serversystem (102) verbundenen Aufnahmegerät (104) aufgenommen wurde, wobei das Verfahren (400) folgende Schritte umfasst:
Einlesen (410) eines Sitzungsaktivierungssignals (114), das ein beim oder vor dem Aufnehmen des Sprachbefehls (111) von dem Aufnahmegerät (104) über die Schnittstelle (106) bereitgestelltes Signal repräsentiert;
Überprüfen (420), ob zwischen dem Sitzungsaktivierungssignal (114) und einer Sitzungs-ID eine Zuordnung besteht;
Ermitteln (430) einer Verfügbarkeit eines vorherigen Servers (112), der vorangehend auf das Einlesen des Sitzungsaktivierungssignals (114) eine der Sitzungs-ID zugeordnete vorherige Sitzung bearbeitet hat, wenn sich im Schritt des Überprüfens (420) ergibt, dass zwischen dem Sitzungsaktivierungssignal (114) und der Sitzungs-ID die Zuordnung besteht;
Aktivieren (440) der Sitzung auf dem vorherigen Server (112), wenn sich im Schritt des Ermittelns (430) ergibt, dass der vorherige Server (112) verfügbar ist und die vorherige Sitzung auf dem Server (112) noch aktiv ist, und Aktivieren (440) der Sitzung auf einem freien Server (200) durch Laden der Sitzung zugeordneter Daten aus einer Sitzungsdatenbank (116), wenn sich im Schritt des Ermittelns (430) ergibt, dass der vorherige Server (112) nicht verfügbar ist;
Empfangen (450) des Sprachbefehls (111) über die Schnittstelle (106) während des Aktivierens der Sitzung oder nachfolgend auf das Aktivieren der Sitzung; und
Abspeichern von die Sitzung betreffende Daten während der bestehenden Sitzung oder bei Beendigung der Sitzung von dem die Sitzung bearbeitenden Server (112; 200) in der Sitzungsdatenbank (116).

2. Verfahren (400) gemäß Anspruch 1, mit einem Schritt des Verarbeitens des Sprachbefehls (111) in der Sitzung unter Verwendung des vorherigen Servers (112), wenn die Sitzung auf dem vorherigen Server (112) aktiviert wurde, und unter Verwendung des freien Servers (200), wenn die Sitzung auf dem freien Server (200) aktiviert wurde.

3. Verfahren (400) gemäß einem der vorangegangenen Ansprüche, mit einem Schritt des Zwischenspeicherns des Sprachbefehls (111), wenn die Sitzung beim Empfangen des Sprachbefehls (111) noch nicht aktiviert ist.

4. Verfahren (400) gemäß einem der vorangegangenen Ansprüche, bei dem im Schritt des Ermittelns (430) der freie Server (200) ermittelt wird, wenn sich im Schritt des Überprüfens (420) ergibt, dass zwischen dem Sitzungsaktivierungssignal (114) und der Sitzungs-ID keine Zuordnung besteht, wobei in einem Schritt des Erstellens eine neue Sitzungs-ID durch den freien Server (200) erstellt wird, im Schritt des Aktivierens (440) auf dem freien Server (200) eine der neuen Sitzungs-ID zugeordnete neue Sitzung aktiviert wird und im Schritt des Empfangens (450) der Sprachbefehl (111) während des Aktivierens der neuen Sitzung oder nachfolgend auf das Aktivieren der neuen Sitzung empfangen wird.

5. Verfahren (400) gemäß einem der vorangegangenen Ansprüche, bei dem im Schritt des Ermitteins (430) der freie Server (200) ermittelt wird, wenn sich im Schritt des Ermittelns (430) ergibt, dass der vorherige Server (112) nicht verfügbar ist.

6. Verfahren (400) gemäß einem der vorangegangenen Ansprüche, bei dem im Schritt des Einlesens (410) ferner zumindest ein weiteres Sitzungsaktivierungssignal (206) eingelesen wird, das ein beim Aufnehmen eines weiteren Sprachbefehls (204) von einem über die Schnittstelle (106) mit dem Serversystem (102) verbundenen weiteren Aufnahmegerät bereitgestelltes Signal repräsentiert, wobei im Schritt des Überprüfens (420) überprüft wird, ob zwischen dem weiteren Sitzungsaktivierungssignal (206) und einer weiteren Sitzungs-ID eine Zuordnung besteht, wobei im Schritt des Ermittelns (430) eine Verfügbarkeit eines weiteren vorherigen Servers (200) ermittelt wird, der vorangehend auf das Einlesen des weiteren Sitzungsaktivierungssignals (206) eine der weiteren Sitzungs-ID zugeordnete weitere vorherige Sitzung bearbeitet hat, wenn sich im Schritt des Überprüfens (420) ergibt, dass zwischen dem weiteren Sitzungsaktivierungssignal (206) und der weiteren Sitzungs-ID die Zuordnung besteht, wobei im Schritt des Aktivierens (440) die weitere Sitzung auf dem weiteren vorherigen Server (200) aktiviert wird, wenn sich im Schritt des Ermittelns (430) ergibt, dass der weitere vorherige Server (200) verfügbar ist und die weitere vorherige Sitzung auf dem weiteren vorherigen Server (200) noch aktiv ist, und die weitere Sitzung auf dem freien Server oder einem weiteren freien Server durch Laden der weiteren Sitzung zugeordneter Daten aus der Sitzungsdatenbank (116) aktiviert wird, wenn sich im Schritt des Ermittelns (430) ergibt, dass der weitere vorherige Server (200) nicht verfügbar ist, wobei im Schritt des Empfangens (450) der weitere Sprachbefehl (204) während des Aktivierens der weiteren Sitzung oder nachfolgend auf das Aktivieren der weiteren Sitzung empfangen wird, und Abspeichern von die weitere Sitzung betreffende Daten während der bestehenden weiteren Sitzung oder bei Beendigung der weiteren Sitzung von dem die weitere Sitzung bearbeitenden Server in der Sitzungsdatenbank (116).

7. Serversystem (102) mit folgenden Merkmalen:
zumindest einem Server (112; 200) zum Verarbeiten eines Sprachbefehls (111), der einen von einem über eine Schnittstelle (106) mit dem Serversystem (102) verbundenen Aufnahmegerät (104) aufgenommen Sprachbefehl repräsentiert;
einer Einleseeinheit (300) zum Einlesen eines Sitzungsaktivierungssignals (114), das ein beim Aufnehmen des Sprachbefehls (111) von dem Aufnahmegerät (104) über die Schnittstelle (106) bereitgestelltes Signal repräsentiert;
einer Überprüfungseinheit (302) zum Überprüfen, ob zwischen dem Sitzungsaktivierungssignal (114) und einer Sitzungs-ID eine Zuordnung besteht;
einer Ermittlungseinheit (304) zum Ermitteln einer Verfügbarkeit eines vorherigen Servers (112), der vorangehend auf das Einlesen des Sitzungsaktivierungssignals (114) eine der Sitzungs-ID zugeordnete vorherige Sitzung bearbeitet hat, wenn zwischen dem Sitzungsaktivierungssignal (114) und der Sitzungs-ID die Zuordnung besteht;
einer Sitzungsdatenbank (116);
einer Aktivierungseinheit (310) zum Aktivieren der Sitzung auf dem vorherigen Server (112), wenn der vorherige Server (112) verfügbar ist und die vorherige Sitzung auf dem Server (112) noch aktiv ist, und zum Aktivieren der Sitzung auf einem freien Server (200) durch Laden der Sitzung zugeordneter Daten aus der Sitzungsdatenbank (116), wenn der vorherige Server (112) nicht verfügbar ist;
einer Empfangseinheit (314) zum Empfangen des Sprachbefehls (111) während des Aktivierens der Sitzung oder nachfolgend auf das Aktivieren der Sitzung; und
wobei der die Sitzung bearbeitende Server (112; 200) ausgebildet ist, um die Sitzung betreffende Daten während der bestehenden Sitzung oder bei Beendigung der Sitzung in der Sitzungsdatenbank (116) abzuspeichern.

8. Sprachdialogsystem (100) mit folgenden Merkmalen:
einem Serversystem (102) gemäß Anspruch 7; und
zumindest einem über eine Schnittstelle (106) mit dem Serversystem (102) verbundenen Aufnahmegerät (104) zum Aufnehmen eines Sprachbefehls (111), wobei das Aufnahmegerät (104) eine Schnittstelle (108) zu dem Serversystem (102) mit dem zumindest einen Server (112) zum Verarbeiten des Sprachbefehls (111) und eine Bereitstellungseinheit (105) aufweist, die ausgebildet ist, um beim Aufnehmen des Sprachbefehls (111) das Sitzungsaktivierungssignal (114) zum Aktivieren der Sitzung zum Verarbeiten des Sprachbefehls (111) auf dem Server (112) an die Schnittstelle (108) bereitzustellen.

9. Computerprogramm, das ausgebildet ist, um das Verfahren (400) gemäß einem der Ansprüche 1 bis 6 auszuführen und/oder anzusteuern.

10. Maschinenlesbares Speichermedium, auf dem das Computerprogramm nach Anspruch 9 gespeichert ist.

## Claims

1. Method (400) for operating a server system (102) having at least one server (112) for processing a voice command (111) recorded by a recording device (104) connected to the server system (102) via an interface (106), wherein the method (400) comprises the following steps:
reading in (410) a session activation signal (114) representing a signal provided by the recording device (104) via the interface (106) during or before the recording of the voice command (111);
checking (420) whether there is an association between the session activation signal (114) and a session ID;
ascertaining (430) an availability of a previous server (112) that handled a previous session associated with the session ID prior to the reading-in of the session activation signal (114) if the checking step (420) reveals that there is the association between the session activation signal (114) and the session ID;
activating (440) the session on the previous server (112) if the ascertaining step (430) reveals that the previous server (112) is available and the previous session is still active on the server (112), and activating (440) the session on a free server (200) by loading data associated with the session from a session database (116) if the ascertaining step (430) reveals that the previous server (112) is not available;
receiving (450) the voice command (111) via the interface (106) during the activating of the session or subsequently to the activating of the session; and
storing data relating to the session in the session database (116) during the existing session or on termination of the session by the server (112; 200) handling the session.

2. Method (400) according to Claim 1, having a step of processing the voice command (111) in the session by using the previous server (112) if the session was activated on the previous server (112), and by using the free server (200) if the session was activated on the free server (200).

3. Method (400) according to either of the preceding claims, having a step of buffer-storing the voice command (111) if the session is not yet activated when the voice command (111) is received.

4. Method (400) according to one of the preceding claims, in which the ascertaining step (430) involves the free server (200) being ascertained if the checking step (420) reveals that there is no association between the session activation signal (114) and the session ID, wherein a creating step involves a new session ID being created by the free server (200), the activating step (440) involves a new session associated with the new session ID being activated on the free server (200), and the receiving step (450) involves the voice command (111) being received during the activating of the new session or subsequently to the activating of the new session.

5. Method (400) according to one of the preceding claims, in which the ascertaining step (430) involves the free server (200) being ascertained if the ascertaining step (430) reveals that the previous server (112) is not available.

6. Method (400) according to one of the preceding claims, in which the reading-in step (410) further involves at least one further session activation signal (206) being read in that represents a signal provided by a further recording device connected to the server system (102) via the interface during the recording of a further voice command (204), wherein the checking step (420) involves checking whether there is an association between the further session activation signal (206) and a further session ID, wherein the ascertaining step (430) involves an availability of a further previous server (200) that handled a further pervious session associated with the further session ID prior to the reading-in of the further session activation signal (206) being ascertained if the checking step (420) reveals that there is the association between the further session activation signal (206) and the further session ID, wherein the activating step (440) involves the further session being activated on the further previous server (200) if the ascertaining step (430) reveals that the further previous server (200) is available and the further previous session is still active on the further previous server (200), and the further session being activated on the free server or a further free server by loading data associated with the further session from the session database (116) if the ascertaining step (430) reveals that the further previous server (200) is not available, wherein the receiving step (450) involves the further voice command (204) being received during the activating of the further session or subsequently to the activating of the further session, and storing data relating to the further session in the session database (116) during the existing further session or on termination of the further session by the server handling the further session.

7. Server system (102) having the following features:
at least one server (112; 200) for processing a voice command (111) representing a voice command recorded by a recording device (104) connected to the server system (102) via an interface (106);
a reading-in unit (300) for reading in a session activation signal (114) representing a signal provided by the recording device (104) via the interface (106) during the recording of the voice command (111);
a checking unit (302) for checking whether there is an association between the session activation signal (114) and a session ID;
an ascertaining unit (304) for ascertaining an availability of a previous server (112) that handled a previous session associated with the session ID prior to the reading-in of the session activation signal (114) if there is the association between the session activation signal (114) and the session ID;
a session database (116);
an activation unit (310) for activating the session on the previous server (112) if the previous server (112) is available and the previous session is still active on the server (112), and for activating the session on a free server (200) by loading data associated with the session from the session database (116) if the previous server (112) is not available;
a receiving unit (314) for receiving the voice command (111) during the activating of the session or subsequently to the activating of the session; and
wherein the server (112; 200) handling the session is designed to store data relating to the session in the session database (116) during the existing session or on termination of the session.

8. Voice dialogue system (100) having the following features:
a server system (102) according to Claim 7; and
at least one recording device (104), connected to the server system (102) via an interface (106), for recording a voice command (111), wherein the recording device (104) has an interface (108) to the server system (102) having the at least one server (112) for processing the voice command (111) and a providing unit (105), which is designed to provide the session activation signal (114) for activating the session for processing the voice command (111) on the server (112) to the interface (108) during the recording of the voice command (111).

9. Computer program designed to carry out and/or control the method (400) according to one of Claims 1 to 6.

10. Machine-readable storage medium on which the computer program according to Claim 9 is stored.

## Revendications

1. Procédé (400) pour faire fonctionner un système serveur (102) comprenant au moins un serveur (112) destiné à traiter une instruction vocale (111) qui a été enregistrée par un appareil d'enregistrement (104) relié au système serveur (102) par le biais d'une interface (106), le procédé (400) comprenant les étapes suivantes :
lecture (410) d'un signal d'activation de session (114) qui représente un signal mis à disposition par le biais de l'interface (106) au moment de ou avant l'enregistrement de l'instruction vocale (111) par l'appareil d'enregistrement (104) ;
contrôle (420) s'il existe une association entre le signal d'activation de session (114) et un ID de session ;
détermination (430) d'une disponibilité d'un serveur (112) précédent, qui a traité une session précédente associée à l'ID de session antérieurement à la lecture du signal d'activation de session (114) lorsqu'il résulte de l'étape du contrôle (420) que l'association existe entre le signal d'activation de session (114) et l'ID de session ;
activation (440) de la session sur le serveur (112) précédent lorsqu'il résulte de l'étape de détermination (430) que le serveur (112) précédent est disponible et que la session précédente est encore active sur le serveur (112), et activation (440) de la session sur un serveur libre (200) par chargement des données associées à la session depuis une base de données de session (116) lorsqu'il résulte de l'étape de détermination (430) que le serveur (112) précédent n'est pas disponible ;
réception (450) de l'instruction vocale (111) par le biais de l'interface (106) pendant l'activation de la session ou postérieurement à l'activation de la session ; et
mémorisation des données concernant la session dans la base de données de session (116) pendant la session existante ou à la fin de la session par le serveur (112 ; 200) qui traite la session.

2. Procédé (400) selon la revendication 1, comprenant une étape de traitement de l'instruction vocale (111) dans la session en utilisant le serveur (112) précédent lorsque la session a été activée sur le serveur (112) précédent et en utilisant le serveur libre (200) lorsque la session a été activée sur le serveur libre (200).

3. Procédé (400) selon l'une des revendications précédentes, comprenant une étape de mémorisation temporaire de l'instruction vocale (111) lorsque la session n'est pas encore activée lors de la réception de l'instruction vocale (111).

4. Procédé (400) selon l'une des revendications précédentes, avec lequel, dans l'étape de détermination (430), le serveur libre (200) est déterminé lorsqu'il résulte de l'étape du contrôle (420) qu'il n'existe pas d'association entre le signal d'activation de session (114) et l'ID de session, un nouvel ID de session étant créé par le serveur libre (200) dans une étape de création, une nouvelle session associée au nouvel ID de session étant activée sur le serveur libre (200) dans l'étape d'activation (440) et l'instruction vocale (111) étant reçue dans l'étape de réception (450) pendant l'activation de la nouvelle session ou à la suite de l'activation de la nouvelle session.

5. Procédé (400) selon l'une des revendications précédentes, avec lequel, dans l'étape de détermination (430), le serveur libre (200) est déterminé lorsqu'il résulte de l'étape de détermination (430) que le serveur (112) précédent n'est pas disponible.

6. Procédé (400) selon l'une des revendications précédentes, avec lequel, dans l'étape de lecture (410), au moins un signal d'activation de session supplémentaire (206) est en outre lu, lequel représente un signal mis à disposition au moment de l'enregistrement d'une instruction vocale supplémentaire (204) par un appareil d'enregistrement supplémentaire relié au système serveur (102) par le biais de l'interface (106), un contrôle étant effectué dans l'étape du contrôle (420) afin de vérifier s'il existe une association entre le signal d'activation de session supplémentaire (206) et un ID de session supplémentaire, une disponibilité d'un serveur précédent supplémentaire (200) étant déterminée dans l'étape de détermination (430), lequel a traité une session précédente supplémentaire associée à l'ID de session supplémentaire antérieurement à la lecture du signal d'activation de session supplémentaire (206) lorsqu'il résulte de l'étape du contrôle (420) que l'association existe entre le signal d'activation de session supplémentaire (206) et l'ID de session supplémentaire, la session supplémentaire étant activée sur le serveur précédent supplémentaire (200) dans l'étape d'activation (440) lorsqu'il résulte de l'étape de détermination (430) que le serveur précédent supplémentaire (200) est disponible et que la session précédente supplémentaire est encore active sur le serveur précédent supplémentaire (200), et la session supplémentaire étant activée sur le serveur libre ou un serveur libre supplémentaire par chargement des données associées à la session supplémentaire depuis la base de données de session (116) lorsqu'il résulte de l'étape de détermination (430) que le serveur précédent supplémentaire (200) n'est pas disponible, l'instruction vocale supplémentaire (204) étant reçue dans l'étape de réception (450) pendant l'activation de la session supplémentaire ou postérieurement à l'activation de la session supplémentaire, et mémorisation des données concernant la session supplémentaire dans la base de données de session (116) pendant la session supplémentaire existante ou à la fin de la session supplémentaire par le serveur qui traite la session supplémentaire.

7. Système serveur (102) ayant les caractéristiques suivantes :
au moins un serveur (112 ; 200) destiné à traiter une instruction vocale (111) qui représente une instruction vocale enregistrée par un appareil d'enregistrement (104) relié au système serveur (102) par le biais d'une interface (106) ;
une unité de lecture (300) destinée à lire un signal d'activation de session (114) qui représente un signal mis à disposition par le biais de l'interface (106) au moment de l'enregistrement de l'instruction vocale (111) par l'appareil d'enregistrement (104) ;
une unité de contrôle (302) destinée à contrôler s'il existe une association entre le signal d'activation de session (114) et un ID de session ;
une unité de détermination (304) destinée à déterminer une disponibilité d'un serveur (112) précédent, qui a traité une session précédente associée à l'ID de session antérieurement à la lecture du signal d'activation de session (114) lorsqu'il existe l'association entre le signal d'activation de session (114) et l'ID de session ;
une base de données de session (116) ;
une unité d'activation (310) destinée à activer la session sur le serveur (112) précédent lorsque le serveur (112) précédent est disponible et la session précédente est encore active sur le serveur (112), et à activer la session sur un serveur libre (200) par chargement des données associées à la session depuis la base de données de session (116) lorsque le serveur (112) précédent n'est pas disponible ;
une unité de réception (314) destinée à recevoir l'instruction vocale (111) pendant l'activation de la session ou postérieurement à l'activation de la session ; et
le serveur (112 ; 200) qui traite la session étant configuré pour mémoriser les données concernant la session dans la base de données de session (116) pendant la session existante ou à la fin de la session.

8. Système de dialogue vocal (100) ayant les caractéristiques suivantes :
un système serveur (102) selon la revendication 7 ; et
au moins un appareil d'enregistrement (104) destiné à enregistrer une instruction vocale (111), relié au système serveur (102) par le biais d'une interface (106), l'appareil d'enregistrement (104) possédant une interface (108) avec le système serveur (102) comprenant l'au moins un serveur (112) destiné à traiter l'instruction vocale (111) et une unité de mise à disposition (105) qui est réalisée pour, lors de l'enregistrement de l'instruction vocale (111), mettre à disposition le signal d'activation de session (114) au niveau de l'interface (108) en vue d'activer la session servant au traitement de l'instruction vocale (111) sur le serveur (112).

9. Programme informatique, qui est configuré pour mettre en œuvre et/ou commander le procédé (400) selon l'une des revendications 1 à 6.

10. Support de mémorisation lisible par machine, sur lequel est mémorisé le programme informatique selon la revendication 9.
